# FASCICULE DE BREVET EUROPEEN

(11) **EP 0 849 868 B1**
(45) Date de publication et mention de la délivrance du brevet: **10.04.2002**
(21) Numéro de dépôt: 97403058.7
(22) Date de dépôt: 16.12.1997
(51) Int. Cl.: H02K 49/04

(54) **Appareil à courants de foucault**
Wirbelstromvorrichtung
Eddy current device

(30) Priorité: 20.12.1996 FR 9615753
(43) Date de publication de la demande: 24.06.1998
(73) Titulaire: LABINAL, 78180 Montigny le Bretonneux (FR)
(72) Inventeur: Even, Denis, 95490 Vaureal (FR); Bouissou, Stefan, 75014 Paris (FR)
(74) Mandataire: Loisel, Bertrand

(56) Documents cités:
- FR-A- 452 820
- FR-A- 1 005 416
- GB-A- 2 168 440
- US-A- 2 240 652
- US-A- 2 640 941

## Description

La présente invention concerne un appareil à courants de Foucault comprenant un ensemble statorique, et un ensemble rotorique pivotant par rapport à l'ensemble statorique autour d'un axe de rotation, l'un des deux ensembles comportant des bobines inductrices dont les axes respectifs sont parallèles à l'axe de rotation et répartis à intervalles réguliers le long d'un cercle centré sur l'axe de rotation, chaque bobine étant traversée par un noyau polaire cylindrique dont une extrémité est pourvue d'un épanouissement polaire de plus grande section, et l'autre des deux ensembles comportant au moins un disque induit situé en regard des épanouissements polaires avec interposition d'un entrefer, dans lequel, relativement au sens de défilement du disque induit devant les épanouissements polaires, chaque épanouissement polaire présente face au disque induit une aire plus grande en avant qu'en arrière du plan radial passant par l'axe de rotation et par l'axe de la bobine correspondante.

Elle concerne notamment, mais non exclusivement, des ralentisseurs à courants de Foucault dans lesquels les bobines inductrices font partie de l'ensemble statorique, et le disque induit fait partie de l'ensemble rotorique.

Les épanouissements polaires remplissent plusieurs fonctions :
- ils ménagent une certaine distance entre les bobines et l'induit de manière à limiter les forces magnétiques d'attraction axiale qui s'exercent sur l'induit ;
- ils assurent une bonne répartition du flux magnétique dans l'induit et donc une génération efficace de courants de Foucault ;
- ils ont en outre un rôle mécanique de maintien en place et de protection des bobines et/ou des noyaux polaires.

L'intérêt de prévoir que les épanouissements polaires présentent face au disque induit une aire plus grande en avant qu'en arrière du plan radial passant par l'axe polaire a été démontré dans le document FR-A-2 574 228 ou US-A-4 668 886. Cela permet d'atteindre des couples de freinage plus élevés grâce à une moindre saturation magnétique du côté arrière des épanouissements par comparaison à la configuration classique où les épanouissements sont placés symétriquement par rapport au plan radial précité.

Un but de la présente invention est d'augmenter encore les couples que l'appareil est capable d'engendrer par production de courants de Foucault dans l'induit.

L'invention propose ainsi, dans un appareil du type indiqué en introduction, de donner une forme générale convexe, dans un plan parallèle au disque induit, aux bords arrière des épanouissements polaires.

Idéalement, ce bord arrière aurait une forme de secteur circulaire prolongeant la forme cylindrique du noyau polaire sous-jacent. Ceci minimiserait la saturation dans le matériau magnétique de l'épanouissement, assurant ainsi la meilleure transmission du flux magnétique à l'induit.

Mais en pratique, les fonctions mécaniques des épanouissements polaires, et les contraintes de leur montage, amènent généralement à laisser déborder vers l'arrière l'épanouissement par rapport à la forme cylindrique du noyau. Ceci permet à l'épanouissement de bien obturer l'interstice entre le noyau et la bobine. Le débordement peut permettre un positionnement plus précis et un maintien plus ferme de l'épanouissement de manière à mieux garantir un entrefer d'épaisseur faible et aussi constante que possible. D'autre part, lorsque l'épanouissement sert à bloquer en place la bobine et/ou le noyau, ce blocage est mieux assuré.

Les inventeurs ont observé une amélioration sensible du couple développé lorsque ce débordement est limité de façon à ce que la distance entre chaque point du bord arrière d'un épanouissement polaire et l'axe de la bobine correspondante reste inférieure à 70% du diamètre du noyau polaire, chaque épanouissement polaire présentant face au disque induit une aire globale supérieure d'au moins 60% à l'aire de la section transversale du noyau polaire.

Dans un mode de réalisation préféré, le bord arrière de chaque épanouissement polaire comporte, dans un plan parallèle au disque induit, une portion en forme d'arc de cercle centré sur l'axe de la bobine correspondante, de rayon légèrement supérieur au rayon du noyau polaire cylindrique. Typiquement, ce rayon de la portion en arc de cercle du bord arrière de l'épanouissement ne dépasse pas 55% du diamètre du noyau polaire, et cette portion en arc de cercle représente un secteur angulaire d'au moins 60°.

En variante, le bord arrière de l'épanouissement polaire peut avoir, dans un plan parallèle au disque induit, une forme polygonale convexe à sommets arrondis.

D'autres particularités et avantages de la présente invention apparaîtront dans la description ci-après d'exemples de réalisation non limitatifs, en référence aux dessins annexés, dans lesquels :
- la figure 1 est une demi-vue schématique en coupe axiale, suivant le plan P indiqué sur la figure 2, d'un ralentisseur à courants de Foucault selon l'invention ;
- la figure 2 est une vue axiale, suivant la direction II indiquée sur la figure 1 du stator de ce ralentisseur, le disque induit étant représenté dans la moitié inférieure de la figure ;
- les figures 3 et 4 sont des graphiques montrant l'amélioration du couple que permettent d'obtenir les dispositions de l'invention en fonction de la vitesse du rotor et des ampères-tours dans les bobines inductrices ;
- la figure 5 est une vue semblable à la figure 2 montrant une variante possible pour la forme des épanouissements polaires ; et
- les figures 6 et 7 sont des vues axiales partielles de plaques portant des épanouissements polaires utilisables dans un appareil selon l'invention.

L'invention est décrite ci-après dans son application préférée, mais non limitative, à des ralentisseurs à courants de Foucault dont le stator 1 porte les bobines inductrices 2, et dont le rotor 3 comporte le disque induit 4.

Le rotor 3 est fixé par l'intermédiaire d'une pièce intercalaire 6 sur un arbre de transmission 7 du véhicule équipé du ralentisseur. Le rotor 3 comporte des bras coudés 8 qui relient le disque induit 4 à la pièce 6. De façon classique, des ailettes de ventilation 9 sont prévues au dos du disque 4 pour ménager des passages d'air facilitant il'évacuation de la chaleur dissipée par effet Joule dans l'induit. En général, le rotor 3 comportera un disque induit 4 de chaque côté du stator 1.

Le stator 1 comporte un support 11 fixé par des moyens appropriés sur le châssis du véhicule, ou encore sur le carter de la boîte de vitesse du véhicule. Ce support 11 comporte une ouverture centrale pour laisser passer l'arbre 7 et le rotor 3. Il porte les bobines inductrices 2, qui sont au nombre de huit dans le cas considéré. Ces huit bobines 2 ont leurs axes Y parallèles à l'axe de rotation X de l'arbre 7 et du rotor 3. Ces axes Y sont répartis à intervalles réguliers de 45° sur un cercle C centré sur l'axe de rotation X. Les sens d'enroulement du fil conducteur alternent d'une bobine à la suivante le long du cercle C, de façon à faire alterner les polarités des inducteurs.

Chaque bobine 2 est traversée par un noyau polaire cylindrique 12 d'axe Y. Face au disque 4, ce noyau polaire 12 a une extrémité frontale pourvue d'un épanouissement polaire 13 de section plus grande, d'au moins 60%, que la section circulaire du noyau 12. L'épanouissement 13 est fixé au noyau polaire 12 par serrage d'une vis 14 située dans l'axe Y de la bobine.

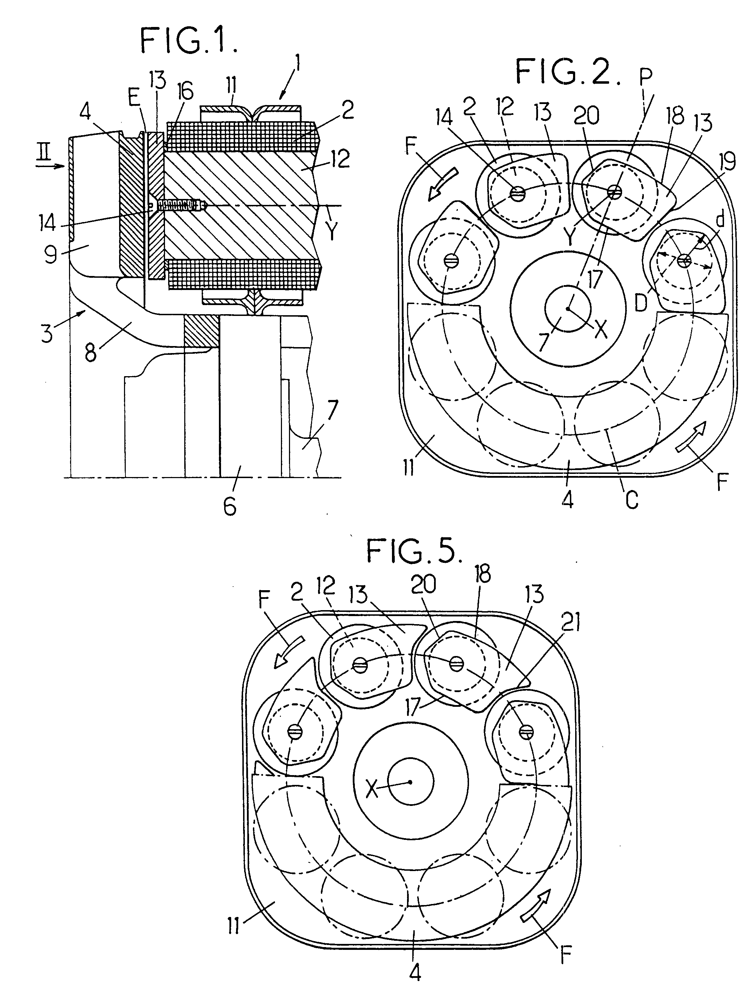

Dans l'exemple représenté sur les figures 1 et 2, l'épanouissement polaire 13 sert à immobiliser la bobine 2 par rapport au noyau polaire 12, une rondelle 16 étant placée autour de l'extrémité frontale du noyau 12, entre l'épanouissement 13 et l'extrémité frontale de la bobine 2.

Un entrefer E de faible épaisseur est: traversé par le flux magnétique entre l'épanouissement polaire 13 et le disque induit 4 qui défile devant lui, dans le sens indiqué par les flèches F sur la figure 2.

On voit que, relativement au sens de défilement F, chaque épanouissement 13 présente face au disque induit 4 une aire plus grande en avant qu'en arrière du plan radial P passant par l'axe de rotation X et par l'axe Y de la bobine correspondante 2. En d'autres termes, les bords intérieur 17 et extérieur 18 de l'épanouissement 13 étant approximativement perpendiculaires au plan P, le bord avant 19 de l'épanouissement 13 est plus éloigné du plan P que son bord arrière 20. Comme le phénomène de réaction d'induit tend à concentrer vers l'arrière de l'épanouissement les lignes de flux magnétique, cette dissymétrie de l'épanouissement polaire par rapport au plan P limite la saturation, et donc la consommation inefficace d'ampères-tours, dans l'épanouissement. Ceci se traduit par une augmentation du couple de freinage obtenu, par rapport à un positionnement symétrique de l'épanouissement: 13.

Les inventeurs ont constaté que cet avantage pouvait être encore renforcé en donnant au bord arrière 20 de l'épanouissement une forme générale convexe dans un plan parallèle au disque induit (le plan de la figure 2), en particulier lorsque la distance d entre ce bord arrière et l'axe polaire Y est partout inférieure à 70% du diamètre D du noyau polaire 12.

Dans l'exemple représenté sur la figure 2, le bord arrière 20 de chaque épanouissement 13 a une forme polygonale convexe à sommets arrondis, à deux côtés, le sommet entre ces deux côtés se trouvant approximativement sur le cercle C passant par les axes polaires Y. Par rapport à un épanouissement de forme trapézoïdale, tel que celui décrit dans le document FR-A-2 574 228, ceci revient à enlever de la matière vers l'arrière de l'épanouissement, matière où l'induction magnétique est relativement élevée, et où la saturation magnétique risque donc de se produire.

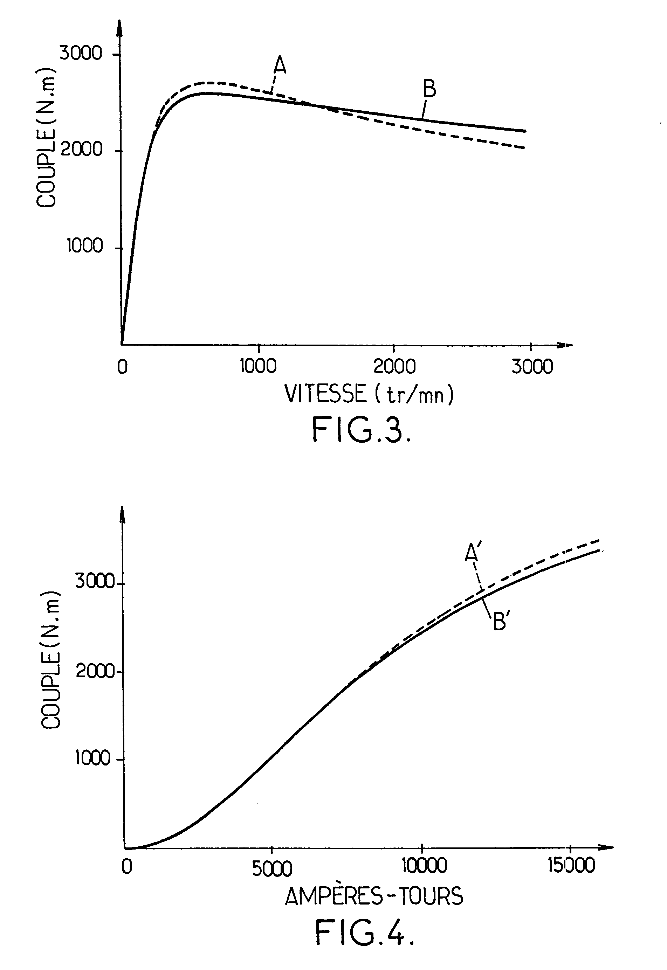

Les figures 3 et 4 illustrent ainsi des améliorations obtenues sur le couple de freinage avec un ralentisseur tel que celui de la figure 2. La figure 3 montre le couple de freinage en fonction de la vitesse de rotation du rotor 3 pour environ 11000 ampères-tours dans les bobines inductrices 2, et la figure 4 montre le couple de freinage en fonction des ampères-tours pour une vitesse de rotation de l'ordre de 670 tours/minute. Les courbes A et A' correspondent à un épanouissement polaire dont le bord arrière a une forme telle que celle représentée sur la figure 2, tandis que les courbes B et B' correspondent à un épanouissement polaire dont le bord arrière est rectiligne selon l'art antérieur. On note une augmentation du couple de l'ordre de 10% pour les vitesses inférieures à 1000 tours/minute et pour des ampères-tours supérieurs à 10000. Ces plages de vitesses et d'ampères-tours correspondent aux régimes normaux de fonctionnement du ralentisseur.

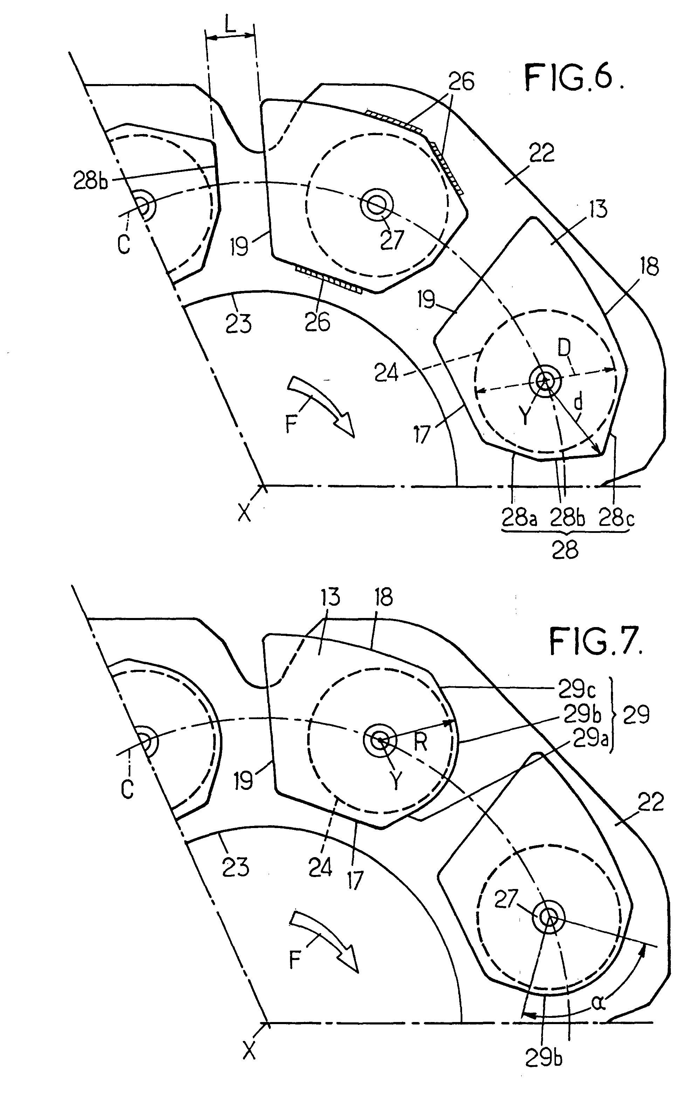

On peut noter sur la figure 3 une diminution du couple de freinage pour les vitesses supérieures à environ 1500 tours/minute. Cette diminution s'explique par la réduction de l'aire totale des épanouissements. Cette inconvénient n'est pas très gênant puisque le ralentisseur fonctionne le plus souvent à des vitesses inférieures. Il peut d'ailleurs y être remédié en adaptant la forme du bord avant de l'épanouissement polaire, par exemple de la manière illustrée par la figure 5.

Dans l'exemple de la figure 5, le bord avant 21 de chaque épanouissement polaire 13 a une forme générale concave complémentaire de la forme convexe du bord arrière 20. Ceci permet d'une part de compenser la diminution de surface de l'épanouissement due à la troncature de son bord arrière, et d'autre part de ménager entre deux épanouissements polaires adjacents un intervalle, ou "fenêtre", de largeur sensiblement constante.

D'autres modes de réalisation de la présente invention sont illustrés par les figures 6 et 7, où on notera que le sens F de défilement de l'induit est l'inverse de celui représenté sur les figures 2 et 5. Dans ces modes de réalisation, les épanouissements polaires 13 sont portés par une plaque-support 22 en matériau amagnétique faisant partie de l'ensemble statorique. La plaque 22 est de forme générale annulaire, avec un orifice central 23 pour laisser passer le rotor 3. La plaque 22 est pourvue de huit orifices circulaires 24 de diamètre juste supérieur à celui des noyaux polaires 12. Les épanouissements polaires 13 sont soudés sur la plaque 22 de manière à recouvrir les huit orifices 24. Le soudage est par exemple effectué en déposant au moyen d'un robot approprié trois cordons de soudure 26 dans l'angle entre la plaque 22 et la tranche de l'épanouissement 13 (cf. figure 6). Après le soudage des épanouissements 13, la plaque 22 est amenée en face du stator pourvu des bobines 2 et de leurs noyaux polaires 12 de manière à engager les extrémités frontales des noyaux 12 dans les orifices 24 de la plaque 22. Des vis semblables aux vis 14 de la figure 1 peuvent alors être vissées, à travers des trous 27 prévus dans les épanouissements 13, dans les taraudages complémentaires prévus dans les noyaux polaires 12 de manière à immobiliser l'ensemble.

Dans l'exemple de la figure 6, le bord arrière 28 de chaque épanouissement 13 a une forme polygonale convexe à sommets arrondis à trois côtés 28a, 28b, 28c entre le bord intérieur 17 et le bord extérieur 18 de l'épanouissement. Ces trois côtés sont presque tangents à l'orifice 24 de la plaque 22 recouvert par l'épanouissement 13, un petit intervalle étant ménagé pour garantir que l'épanouissement obture de manière fiable l'orifice 24. Les bords 28 de forme polygonale permettent de déposer des cordons de soudure 26 rectilignes, ce qui est plus fiable avec la plupart des robots soudeurs existants.

La portion centrale 28b de la forme polygonale du bord arrière 28 est parallèle au bord avant rectiligne 19 de l'épanouissement 13 qui lui succède dans le sens F de défilement de l'induit 4 devant les épanouissements. Cette disposition permet d'obtenir une largeur de fenêtre L constante sur une partie de la largeur radiale des épanouissements.

Dans le mode de réalisation de la figure 7, le bord arrière 29 de chaque épanouissement 13 présente successivement, du bord intérieur 17 vers le bord extérieur 18, une première portion rectiligne 29a, une portion en arc de cercle 29b et une seconde portion rectiligne 29c, les portions rectilignes 29a et 29c étant tangentes à la portion centrale en arc de cercle 29b. Cette portion en arc de cercle 29b est centrée sur l'axe polaire Y, et son rayon R est légèrement supérieur (entre 100% et 110%) au rayon du noyau polaire cylindrique 12 et à celui de l'orifice 24 de la plaque 22. Cet arc de cercle s'étend sur un secteur angulaire α d'au moins 60° (α≃90° dans l'exemple représenté).

## Revendications

1. Appareil à courants de Foucault comprenant un ensemble statorique (1), et un ensemble rotorique (3) pivotant par rapport à l'ensemble statorique autour d'un axe de rotation (X), l'un des deux ensembles comportant des bobines inductrices (2) dont les axes respectifs (Y) sont parallèles à l'axe de rotation et répartis à intervalles réguliers le long d'un cercle (C) centré sur l'axe de rotation, chaque bobine étant traversée par un noyau polaire cylindrique (12) dont une extrémité est pourvue d'un épanouissement polaire (13) de plus grande section, et l'autre des deux ensembles comportant au moins un disque induit (4) situé en regard des épanouissements polaires avec interposition d'un entrefer (E), dans lequel, relativement au sens (F) de défilement du disque induit devant les épanouissements polaires, chaque épanouissement polaire présente face au disque induit une aire plus grande en avant qu'en arrière du plan radial (P) passant par l'axe de rotation et par l'axe de la bobine correspondante, **caractérisé en ce que** chaque épanouissement polaire (13) a un bord arrière (20;28;29) de forme générale convexe dans un plan parallèle au disque induit (4).

2. Appareil selon la revendication 1, dans lequel la distance (d) entre chaque point du bord arrière (20;28;29) d'un épanouissement polaire (13) et l'axe (Y) de la bobine correspondante (2) est inférieure à 70% du diamètre (D) du noyau polaire (12), et dans lequel chaque épanouissement polaire (13) présente face au disque induit (4) une aire supérieure d'au moins 60% à l'aire de la section transversale du noyau polaire (12).

3. Appareil selon la revendication 1 ou 2, dans lequel le bord arrière (29) de chaque épanouissement polaire (13) comporte, dans un plan parallèle au disque induit (4), une portion (29b) en forme d'arc de cercle centré sur l'axe (Y) de la bobine correspondante (2), de rayon (R) légèrement supérieur au rayon du noyau polaire cylindrique (12).

4. Appareil selon la revendication 1 ou 2, dans lequel le bord arrière (20;28) de chaque épanouissement polaire (13) a, dans un plan parallèle au disque induit (4), une forme polygonale convexe à sommets arrondis.

5. Appareil selon la revendication 4, dans lequel la forme polygonale du bord arrière (28) de chaque épanouissement polaire (13) a une portion centrale (28b) sensiblement parallèle au bord avant rectiligne (19) de l'épanouissement polaire qui lui succède dans le sens (F) de défilement du disque induit (4) devant les épanouissements polaires.

6. Appareil selon l'une quelconque des revendications 1 à 4, dans lequel chaque épanouissement polaire (13) a un bord avant (21) de forme générale concave complémentaire de la forme convexe du bord arrière (20), de façon que l'intervalle entre deux épanouissements polaires adjacents soit de largeur sensiblement constante.

## Claims

1. Eddy current apparatus comprising a stator assembly (1), and a rotor assembly (3) revolving with respect to the stator assembly about an axis of rotation (X), one of the two assemblies including inductor coils (2) having respective axes (Y) parallel to the axis of rotation and distributed at regular intervals along a circle (C) centred on the axis of rotation, each coil having a cylindrical pole core (12) extending therethrough, each pole core having an end provided with a pole shoe (13) of larger cross-section, and the other one of the two assemblies including at least one armature disc (4) situated facing the pole shoes with interposition of a gap (E), wherein, in relation to the direction (F) of travel of the armature disc past the pole shoes, each pole shoe offers to the armature disc an area which is larger in front than to the rear of a radial plane (P) passing through the axis of rotation and through the axis of the corresponding coil, **characterized in that** each pole shoe (13) has a rear edge (20; 28; 29) of convex general shape in a plane parallel to the armature disc (4).

2. Apparatus according to Claim 1, wherein the distance (d) between each point of the rear edge (20; 28; 29) of a pole shoe (13) and the axis (Y) of the corresponding coil (2) is less than 70% of the diameter (D) of the pole core (12), and wherein each pole shoe (13) offers to the armature disc (4) an area greater by at least 60% than the area of the cross-section of the pole core (12).

3. Apparatus according to Claim 1 or 2, wherein the rear edge (29) of each pole shoe (13) includes, in a plane parallel to the armature disc (4), a portion (29b) in the shape of an arc of a circle centred on the axis (Y) of the corresponding coil (2), of slightly greater radius (R) than the radius of the cylindrical pole core (12).

4. Apparatus according to Claim 1 or 2, wherein the rear edge (20; 28) of each pole shoe (13) has, in a plane parallel to the armature disc (4), a convex polygonal shape with rounded vertices.

5. Apparatus according to Claim 4, wherein the polygonal shape of the rear edge (28) of each pole shoe (13) has a central portion (28b) substantially parallel to the straight front edge (19) of the pole shoe which follows it in the direction (F) of travel of the armature disc (4) past the pole shoes.

6. Apparatus according to any one of Claims 1 to 4, wherein each pole shoe (13) has a front edge (21) of concave general shape complementary to the convex shape of the rear edge (20), so that the interval between two adjacent pole shoes is of substantially constant width.

## Patentansprüche

1. Wirbelstromvorrichtung, die eine Statoranordnung (1) und eine in bezug auf die Statoranordnung um eine Drehachse (X) schwenkende Rotoranordnung (3) umfaßt, wobei eine der beiden Anordnungen Induktionsspulen (2) enthält, deren jeweilige Achsen (Y) parallel zur Drehachse und mit gleichmäßigen Zwischenräumen entlang einem in der Drehachse zentrierten Kreis (C) verteilt sind, wobei jede Spule von einem zylindrischen Polkern (12) durchlaufen ist, dessen eines Ende mit einer Polausformung (13) von größerem Querschnitt versehen ist, und wobei die andere der beiden Anordnungen wenigstens eine Ankerscheibe (4) enthält, die gegenüberliegend zu den Polausformungen mit Zwischenanordnung eines Luftspaltes (E) liegt, wobei, im Verhältnis zur Laufrichtung (F) der Ankerscheibe gegenüber den Polausformungen, jede Polausformung zur Ankerscheibe hin eine größere Fläche vor als hinter der Radialebene (P) aufweist, die von der Drehachse und von der Achse der entsprechenden Spule durchlaufen wird, **dadurch gekennzeichnet, daß** jede Polausformung (13) eine Hinterkante (20; 28; 29) von konvexer Grundform in einer zur Ankerscheibe (4) parallelen Ebene hat.

2. Vorrichtung nach Anspruch 1, bei der der Abstand (d) zwischen jedem Punkt der Hinterkante (20; 28; 29) einer Polausformung (13) und der Achse (Y) der entsprechenden Spule (2) kleiner als 70% des Durchmessers (D) des Polkerns (12) ist und bei der jede Polausformung (13) zur Ankerscheibe (4) hin eine Fläche aufweist, die wenigstens um 60% größer als die Fläche des Querschnitts des Polkerns (12) ist.

3. Vorrichtung nach Anspruch 1 oder 2, bei der die Hinterkante (29) jeder Polausformung (13) in einer zur Ankerscheibe (4) parallelen Ebene einen Teil (29b) in Form eines zur Achse (Y) der entsprechenden Spule (2) zentrierten Kreisbogens mit einem Radius (R) aufweist, der leicht größer als der Radius des zylindrischen Polkerns (12) ist.

4. Vorrichtung nach Anspruch 1 oder 2, bei der die Hinterkante (20; 28) jeder Polausformung (13) in einer zur Ankerscheibe (4) parallelen Ebene eine konvexe Polygonalform mit abgerundeten Ecken hat.

5. Vorrichtung nach Anspruch 4, bei der die Polygonalform der Hinterkante (28) jeder Polausformung (13) einen zentralen Teil (28b) hat, der im wesentlichen parallel zur geradlinigen Vorderkante (19) der Polausformung ist, die ihr in der Laufrichtung (F) der Ankerscheibe (4) gegenüber den Polausformungen folgt.

6. Vorrichtung nach einem der Ansprüche 1 bis 4, bei der jede Polausformung (13) eine Vorderkante (21) von konkaver Grundform hat, die komplementär zur konvexen Form der Hinterkante (20) ist, derart, daß der Zwischenraum zwischen zwei benachbarten Polausformungen von im wesentlichen konstanter Breite ist.
